# EUROPÄISCHE PATENTSCHRIFT

(11) **EP 3 881 665 B1**
(45) Veröffentlichungstag und Bekanntmachung des Hinweises auf die Patenterteilung: **22.11.2023**
(21) Anmeldenummer: 21154855.7
(22) Anmeldetag: 02.02.2021
(51) Int. Cl.: A01D 34/73, A01D 34/835, A01D 75/18

(54) **MULCHGERÄT ZUR BEARBEITUNG VON PFLANZENSTOPPELN**
MULCHING APPARATUS FOR PROCESSING PLANT STUBBLE
APPAREIL DE PAILLAGE DESTINÉ AU TRAITEMENT DES CHAUMES VÉGÉTAUX

(30) Priorität: 18.03.2020 DE 102020203474
(43) Veröffentlichungstag der Anmeldung: 22.09.2021
(73) Patentinhaber: Deere & Company, Moline, IL 61265 (US)
(72) Erfinder: Weitenberg, Clemens, 68163 Mannheim (DE); Schild, Jan-Dirk, 68163 Mannheim (DE); Awater, Klaus, 68163 Mannheim (DE); Huening, Martin, 68163 Mannheim (DE)
(74) Vertreter: Holst, Sönke

(56) Entgegenhaltungen:
- EP-A1- 2 430 898
- EP-A1- 3 272 199

## Beschreibung

Die Erfindung betrifft einen Erntevorsatz nach dem Oberbegriff des Anspruchs 1.

### Stand der Technik

Unterhalb von Erntevorsätzen zur Maisemte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*). Derartige Mulchgeräte können auch nach der Ernte in einem separaten Arbeitsgang genutzt werden, um sie hinter einem Ackerschlepper über ein Feld zu ziehen und die Pflanzenstümpfe zu zerkleinern (EP 3 199 010 A1).

Üblicherweise werden zur mechanischen Bearbeitung der Maispflanzenstümpfe schneidende, um die Hochachse rotierende (EP 0 423 636 A1, EP 0 653 152 A1, DE 10 2004 020 447 A1, DE 10 2012 106 603 A1) oder um horizontale, quer zur Vorwärtsrichtung orientierte Achsen drehende Werkzeuge (DE 35 15 295 A1, WO 2014/012620 A1) verwendet.

Die bearbeiteten Felder sind nicht in allen Fällen ganz eben und es können sich auch Steine auf oder an der Oberfläche des Bodens befinden. Auch wenn durch geeignete, bodenkopierende Führungen der Mulchgeräte versucht wird, einen Kontakt des Werkzeugs mit dem Boden oder Steinen zu verhindern, indem man das - um die Hochachse oder eine nach hinten und oben geneigte Achse rotierende Werkzeuge umfassende - Mulchgerät um die Querachse pendelnd aufhängt und an seiner Rückseite mit einer Kufe über den Boden führt (s. EP 3 272 199 A1), besteht dennoch die Gefahr, dass das Werkzeug gegen einen Stein schlägt. Dabei können in Drehrichtung des Werkzeugs wirkende Kräfte durch eine Überlastkopplung im Antriebsstrang des Werkzeugs aufgenommen werden (s. EP 1 493 319 A1), und dank der um die Querachse pendelnde Aufhängung kann das Mulchgerät gegenüber seiner Aufhängung pendelnd nach oben ausweichen, wenn der Stein mehr oder weniger genau vor oder hinter der Drehachse der Werkzeuge liegen sollte. Eine andere Situation ergibt sich jedoch, wenn der Stein neben der Drehachse liegt, denn dann wirkt eine nach oben gerichtete Kraft auf das Werkzeug. Ein Ausweichen des Mulchgeräts ist aufgrund dessen Konstruktion und Anbringung nicht möglich, was dazu führt, dass in ungünstigen Fällen nicht nur das Werkzeug, sondern auch das zu seinem rotierenden Antrieb bereitgestellte Getriebe beschädigt wird. Es sei jedoch angemerkt, dass Beschädigungen des Antriebsstrangs des Werkzeugs bei anderen Konfigurationen des Mulchgeräts und bei anderen Richtungen des Aufpralls gegen einen Stein oder ein anderes Hindernis möglich sind, die bisher in relativ aufwändiger Weise durch eine Überlastkupplung des Getriebes abgesichert werden.

Die EP 2 430 898 A1 beschreibt einen Rasenmäher mit einer vertikal verlaufenden Welle, die durch eine Sicherheitskupplung mit dem Messer verbunden ist. Die Sicherheitskupplung umfasst Schrauben, die bei einer Überschreitung eines maximalen Drehmoments in Drehrichtung des Messers abschert.

### Problem

Die vorliegende Erfindung hat sich zum Ziel gesetzt, ein gegenüber dem Stand der Technik verbessertes Mulchgerät bereitzustellen.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Ein Erntevorsatz ist mit einem Mulchgerät zur Bearbeitung von Pflanzenstoppeln ausgestattet. Das Mulchgerät umfasst eine Antriebswelle, ein mit der Antriebswelle gekoppeltes Werkzeug zur Bearbeitung der Pflanzenstoppeln, das durch die Antriebswelle in eine Drehbewegung versetzbar ist, und Verbindungsmittel zur drehmomentübertragenden Verbindung der Antriebwelle mit dem Werkzeug. Die Verbindungsmittel umfassen eine Überlastsicherung.

Auf diese Weise vermeidet man mit einfachen Mitteln eine Beschädigung des Antriebsstrangs des Werkzeugs in dem Fall, dass ein übermäßiges Drehmoment auf das Werkzeug einwirkt, z.B. wenn dieses gegen einen Stein prallen sollte.

Bei der Antriebswelle handelt es sich nicht um irgendeine Welle im Antriebsstrang des Werkzeugs, sondern um jene End-Antriebswelle (z.B. die in EP 3 272 199 A1 mit dem Bezugszeichen 56 gekennzeichnete Welle), die dem Werkzeug räumlich unmittelbar benachbart ist und durch die Verbindungsmittel drehfest mit dem Werkzeug gekoppelt wird und mit derselben Drehzahl und in derselben Drehrichtung rotiert.

Die Überlastsicherung ist konfiguriert, bei Überschreitung eines maximalen, zwischen der Antriebswelle und dem Werkzeug wirkenden Drehmoments abzureißen. Die Überlastsicherung kann derart ausgestaltet sein, dass dieses maximale Drehmoment derart auf das Werkzeug einwirkt, dass es das Werkzeug um eine quer zur Drehachse der Antriebswelle gerichtete Achse verkippt (d.h. derart wirkt, dass es bestrebt ist, den in der Ebene des Werkzeugs und der Antriebswelle gemessenen Winkel zwischen dem Werkzeug und der Antriebswelle zu verändern, was z.B. der Fall ist, wenn das Werkzeug über einem Stein hinweggleitet). Somit kann eine Überlastsicherung bereitgestellt werden, die das Werkzeug und seinen Antriebsstrang gegen (die eingangs erwähnten) Kräfte schützt, welche das Werkzeug beim Aufprall gegen das Hindernis quer zu dessen Bewegungsrichtung ablenken.

Die Verbindungsmittel umfassen eine drehfest und axial unbeweglich mit der Welle gekoppelte Halterung und mehrere, zwischen der Halterung und dem Werkzeug angeordnete, bei Überlastung abreißende Stifte. Der Stift ist parallel zur Drehachse der Antriebswelle orientiert. Der Stift ist im Abstand von der Drehachse der Antriebswelle positioniert und kann als Schraube ausgeführt sein.

Die Halterung ist mit einem Ansatz ausgestattet, der eine Drehmomentübertragung von der Halterung auf das Werkzeug und umgekehrt in Drehrichtung ermöglicht. Ein derartiger Ansatz kann an die Halterung in der Nachbarschaft des Stifts angeformt sein und mit einer Wand einer Bohrung oder Öffnung des Werkzeugs zusammenwirken, durch welche sich der Stift erstreckt. Auch kann die Halterung weiteren Ansatz umfassen, der konfiguriert ist, nach Abreißen eines Stifts eine unkontrollierte Bewegung des Werkzeugs gegenüber der Halterung zu verhindern. Ein derartiger, weiterer Ansatz kann an die Halterung in der Nachbarschaft einer mittigen Öffnung des Werkzeugs angeformt sein und mit einer Wand der Öffnung des Werkzeugs zusammenwirken.

Die Antriebswelle ist um eine vertikale oder gegenüber der Vertikalen geneigte Achse drehbar. Die Antriebswelle ist um eine quer zur Vorwärtsrichtung des Mulchgeräts orientierte Achse schwenkbar und bodenkopierend um die quer zur Vorwärtsrichtung des Mulchgeräts orientierte Achse bewegbar.

Das Mulchgerät ist an einem Erntevorsatz mit Ernteeinheiten zur Ernte von stängelartigen Pflanzen angebracht, insbesondere den Ernteeinheiten nachgeordnet.

### Ausführungsbeispiel

In den Zeichnungen wird ein nachfolgend näher beschriebenes Ausführungsbeispiel dargestellt. Es zeigen:
- Fig. 1: eine Seitenansicht einer Erntemaschine mit einem daran angebrachten Erntevorsatz, an dem Mulchgeräte angebracht sind,
- Fig. 2: eine Seitenansicht des Erntevorsatzes bei der Ernte,
- Fig. 3: eine perspektivische Ansicht des Mulchgeräts von vorn unten,
- Fig. 4: eine Explosionsansicht des Mulchgeräts der Figur 4, und.
- Fig. 5: eine perspektivische Ansicht .der Halterung der Figur 4.

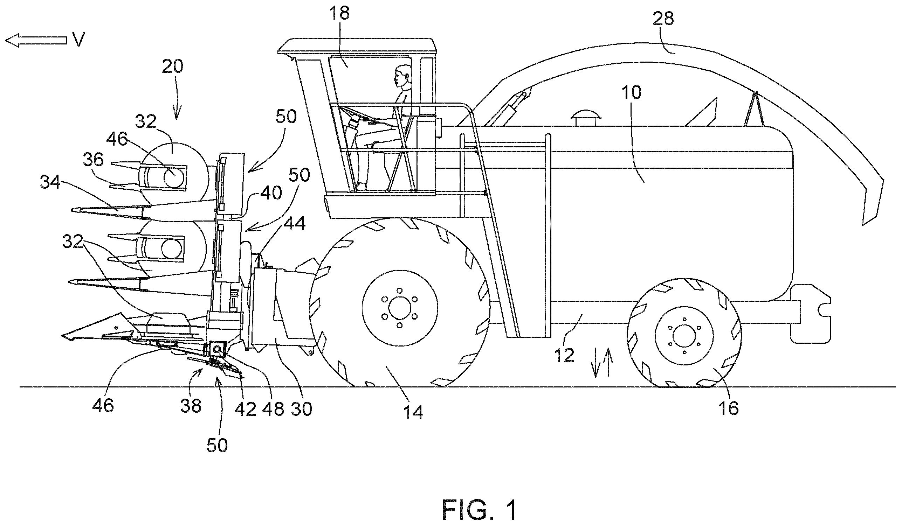

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes stängelartiges Erntegut, z. B. Mais, wird über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt.

Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückern Verwendung finden oder an separaten Geräten zur Stoppelbearbeitung. Im Folgenden beziehen sich Richtungsangaben, wie vor, hinter, seitlich und oberhalb auf die Vorwärtsrichtung V der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekannter Maismähvorsatz, der einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Ernteeinsatz hydraulisch heruntergeschwenkt werden, so dass sie beim Erntebetrieb parallel zum Mittelteil 38 verlaufen. Anschließend können sie wieder hinauf geschwenkt werden. Die Figur 1 zeigt die Seitenteile 40 in hochgeschwenktem Zustand. Am Mittelteil 38 sind in der vorliegenden Ausführungsform vier Emteeinheiten 32 mit unteren Schneidscheiben zum Abschneiden der Pflanzen und oberen Förderscheiben zum Abtransport der Pflanzen angebracht, während an beiden Seitenteilen 40 jeweils zwei Ernteeinheiten 32 angebracht sind. Der Erntevorsatz 20 ist in an sich bekannter Weise mit Halmteilern 36, den Emteeinheiten 32, Teilerspitzen 34, Abdeckplatten und Fördermitteln ausgestattet, um das geerntete Gut der Häckseltrommel der Erntemaschine 10 zuzuführen. Der Emtevorsatz 20 zieht im Betrieb die Stängel des Mähguts in aufrechter Stellung ein, schneidet sie ab und führt sie über Querfördertrommeln und Abgabefördertrommeln (beide nicht gezeigt, s. aber EP 0 760 200 A1) dem mit Einzugswalzen ausgestatteten Einzugsgehäuse 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil 38 und eines jedem Seitenteil 40 zugeordnet ist. An der Vorderseite des unteren Querträgers 42 sind Getriebegehäuse 46 angeschraubt, die zum Antrieb jeweils einer Ernteeinheit 32 dienen. Eine Querwelle 48 zum Antrieb der Emteeinheiten 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist mit hakenförmigen Tragelementen verbunden, die von komplementären Tragelementen des Einzugsgehäuses 30 teilweise untergriffen werden und zur Befestigung des Erntevorsatzes 20 an der Erntemaschine 10 dienen. Er ist durch sich vertikal erstreckende Träger und Verbindungsbleche mit dem unteren Querträger 42 verbunden. Der Trägerrahmen mit den Querträgern 42, 44 und den sich vertikal erstreckenden Trägem und Verbindungsblechen bildet somit ein Skelett des Erntevorsatzes 20, das alle weiteren Elemente des Erntevorsatzes 20 trägt.

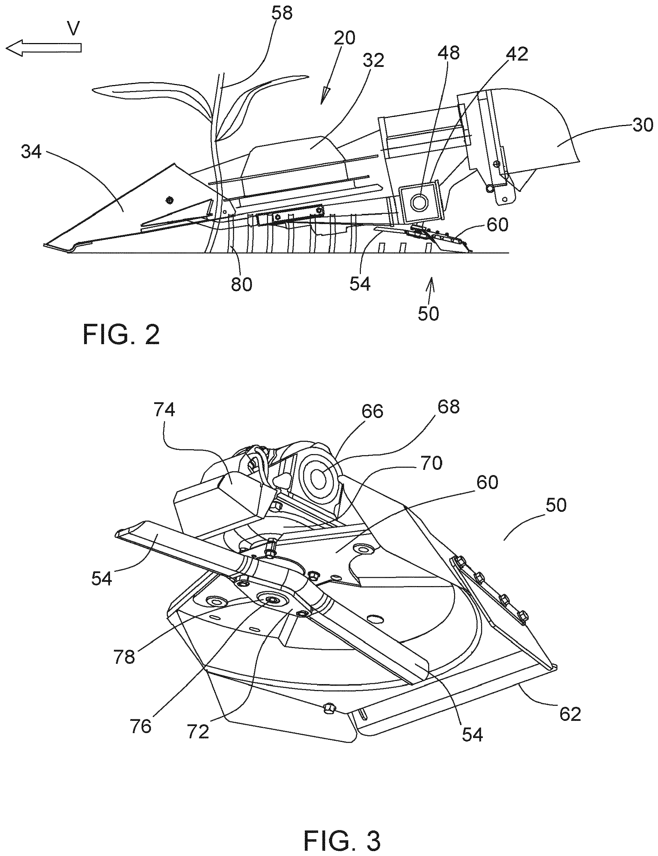

Die Figur 2 zeigt den Erntevorsatz 20 in einer Position, die er beim Ernten einnimmt, wofür das Einzugsgehäuse 30 durch einen von einer Höhensteuerung kontrollierter Aktor um die Drehachse der Häckseltrommel aus der in Figur 1 gezeigten Transportposition abgesenkt wird. Dieser Aktor kontrolliert auch die Höhe des Erntevorsatzes 20 über dem Boden, in einer an sich bekannten, auf Fühlern basierenden Weise.

Rückwärtig jeder Ernteeinheit 32 ist jeweils ein Mulchgerät 50 angebracht. Das Mulchgerät 50 ist mit seiner Drehachse bezüglich der Vorwärtsrichtung V rückwärtig von der Drehachse der zugehörigen Ernteeinheit 32 angeordnet. Dort laufen im normalen Erntebetrieb die Pflanzen ein. Falle eine Ernteeinheit 32 mehrere Pflanzenreihen aberntet, können ihr mehrere Mulchgeräte 50 zugeordnet werden, deren Drehachsen rückwärtig der zu erwartenden Einlaufstellen der Pflanzenreihen angeordnet sind. Es wäre auch denkbar, die Mulchgeräte 50 lückenlos oder mit kleinen Lücken über die ganze Arbeitsbreite des Erntevorsatzes 20 zu verteilen. Das Mulchgerät 50 dient dazu, die nach dem Abernten der Pflanzen 58 durch die Emteeinheiten 32 im Boden verbleibenden Pflanzenstoppel 80 zu zerfasern oder auf eine beliebige andere Weise zu bearbeiten, um beispielsweise den Überwinterungsraum des Maiszünslers zu zerstören.

Bei der Ausführungsform nach Figur 1 ist jeder Ernteeinheit 32 genau ein Mulchgerät 50 zugeordnet, das in Vorwärtsrichtung genau hinter dem Getriebe 46 angeordnet ist. Der Durchmesser der Ernteeinheit 32 ist mit ca. 75 cm so gewählt, dass genau eine Reihe des Emteguts, das in üblichen seitlichen Abständen von 75 cm angebaut wird, geerntet werden kann. Bei einer anderen Ausführungsform können hingegen jeder Ernteeinheit 32 zwei Mulchgeräte 50 zugeordnet werden, die in Vorwärtsrichtung V hinter dem Getriebe 46, diesem gegenüber jedoch symmetrisch seitlich versetzt angeordnet sind und sich dort an den Stellen befinden, an denen üblicherweise die Pflanzen einlaufen. Der Durchmesser der Ernteeinheit 32 wäre bei jener Ausführungsform mit ca. 1,5 m so gewählt, dass genau zwei Reihen des Emteguts, das in seitlichen Abständen von 75 cm angebaut wird, geerntet werden können. Es wären jedoch beliebige andere Arbeitsbreiten, Drehrichtungen und Anzahlen der Emteeinheiten 32 möglich. Auch könnten diese als Kettenförderer oder Pflückeinheiten ausgeführt werden. Zudem könnten an den Seitenteilen 40 noch weitere Außenteile (nicht gezeigt) angebracht werden, die gegenüber der Betriebsstellung in der Transportstellung um ca. 180° nach innen geklappt werden.

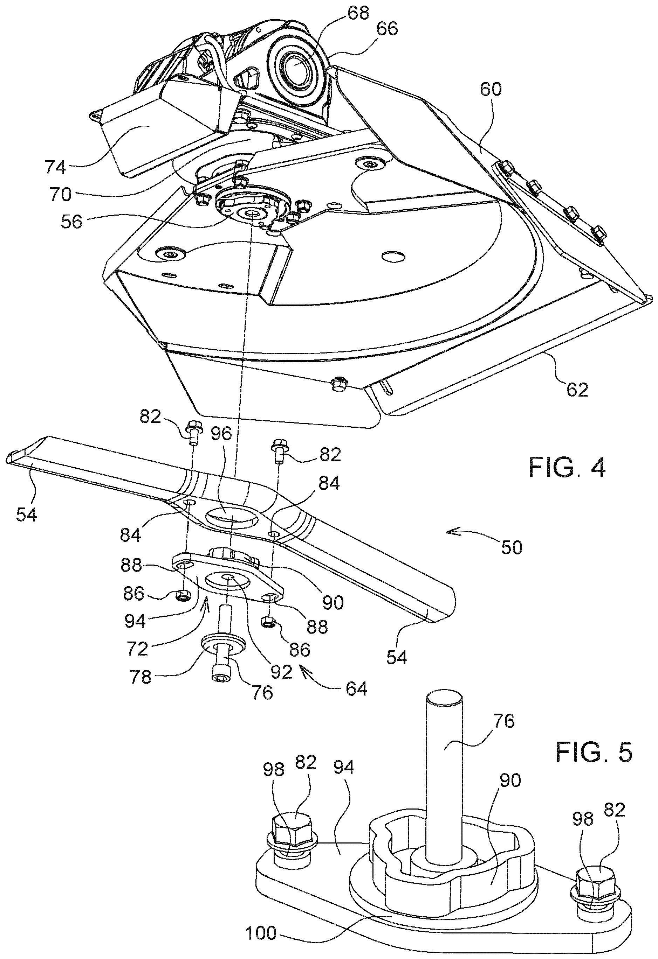

Es wird nun auf die Figuren 2 und 3 verwiesen. Das Mulchgerät 50 umfasst zwei sich diametral gegenüber liegende, einteilig hergestellte Werkzeuge 54, die in noch zu diskutierender Weise mit einer mittigen Antriebswelle 56 verbunden sind, die in der Figur 4 gezeigt wird. Die Werkzeuge 54 sind als stumpfe Schlagkörper ausgeführt, d.h. an ihren vorlaufenden Kanten abgerundet. Als Werkzeuge 54 könnten alternativ oder zusätzlich schneidende Messer verwendet werden, wie sie üblicherweise unter Maispflückern eingebaut werden. Diese Messer können starr mit der Welle 56 verbunden werden.

Die Antriebswelle 56 ist an ihrem unteren Ende in der noch zu diskutierenden, in der Figur 4 gezeigten Weise mit den Werkzeugen 54 verbunden und an ihrem oberen Ende in einem Getriebe 66 gelagert. Durch eine Hohlwelle 68 des Getriebes 66 erstreckt sich die Querwelle 48 und ist formschlüssig mit der sechseckigen Hohlwelle 68 gekoppelt. Das Getriebe 66 enthält Antriebselemente (nicht gezeigt), welche die Querwelle 48 über die Hohlwelle 68 mit der Antriebswelle 56 antriebsmäßig verbinden, z.B. Kegelräder.

Das Getriebe 66 ist gegenüber der Querwelle 48 und dem unteren Querträger 42 um die Dreh- und Längsachse der Querwelle 48 frei schwenkbar gelagert. Das Gehäuses des Getriebes 66 ist mit einer Halterung 70 verbunden, an welcher eine Umhausung 60 des Mulchgeräts 50 befestigt ist, welche die Werkzeuge 54 nach oben und hinten hin umschließt. Ein Aktor 74, der als pneumatischer oder hydraulischer Zylinder ausgeführt sein kann, ist einerseits mit dem Querträger 42 und anderseits mit der Haltung 70 (und/oder dem Gehäuse des Getriebes 66 und/oder der Umhausung 62) gekoppelt und beaufschlagt die Umhausung 60 und die Antriebswelle 56 mit einem Drehmoment, das die Rückseite der Umhausung 60, an welcher sich eine im Bodeneingriff befindliche Kufe 62 befindet, um das Mulchgerät 50 bodenkopierend über das Feld zu führen. Die Antriebswelle 56 erstreckt sich durch die Halterung 70 und bewegt sich mit letzterer und der Umhausung 60 mit, wenn das Mulchgerät 50 in bodenkopierender Weise um die horizontale, quer zur Vorwärtsrichtung V angeordnete Längs- und Drehachse der Querwelle 48 pendelt. Der Aktor 74 wird angesteuert wie in der EP 3 391 724 A1 beschrieben.

Der Aktor 74 könnte auch durch eine Feder ersetzt oder ergänzt werden oder entfallen.

Die Anbindung der Antriebswelle 56 an die Werkzeuge 54 erfolgt auf der in der Figur 4 gezeigten Weise. Hierzu sind Verbindungsmittel 64 zur drehfesten Kopplung der Antriebswelle 56 an die Werkzeuge 54 vorgesehen, die eine Halterung 72 und Stifte 82 umfassen. Die Halterung 72 umfasst einen zylindrischen Bereich 90 mit konturiertem Umfang, der innenseitig mit einer Verzahnung 92 versehen ist, der zur außenseitigen Verzahnung des unteren Bereichs der Antriebswelle 56 komplementär ist. Zudem umfasst die Halterung 72 einen sich quer zur Drehachse und Längsrichtung des Bereichs 90 erstreckenden Flansch 94, der zwei diametral gegenüber liegende Flügelabschnitte aufweist, die jeweils mit Bohrungen 88 ausgestattet sind.

Die (wie angemerkt einteilig ausgeführten) Werkzeuge 54 sind in ihrem mittigen Bereich mit einer Öffnung 96 ausgestattet, die es ermöglicht, die Öffnung 96 auf den Bereich 90 zu stecken. Zudem sind die Werkzeuge 54 mit Löchern 84 versehen. Dadurch wird es möglich, als Schrauben ausgeführte Stifte 82 jeweils durch eines der Löcher 84 und eine der Bohrungen 88 zu stecken und - nachdem der Bereich 90 in die Öffnung 96 (oder umgekehrt) geführt wurde - mit Muttern 86 zu fixieren. Die Muttern 86 verschwinden letztlich in den Bohrungen 88, damit sie nicht allzu sehr verschleißen, liegen aber an Böden der Bohrungen 88 an. Die Halterung 72 wird somit durch die Stifte 82 mit den Werkzeugen 54 drehfest und axial unverschiebbar gekoppelt, jedenfalls solange die Stifte 82 intakt sind. Im zusammengebauten Zustand befindet sich der Flansch 94 der Halterung 72 unterhalb der Werkzeuge 54, die dann somit zwischen dem Getriebe 66 (bzw. der Umhausung 60) und der Halterung 72 angeordnet sind.

In der Figur 5 ist erkennbar, dass die Halterung 72 an ihrer Oberseite in der Umgebung der Bohrungen 88 mit nach oben stehenden, zylindrischen Ansätzen 98 ausgestattet ist. An den Ansätzen 98 liegen die Wände der Löcher 84 der Werkzeuge 54 an, wenn die Werkzeuge 54 durch die Stifte 82 an der Halterung 72 fixiert sind. Zudem ist erkennbar, dass die Halterung 72 an ihrer Oberseite in der Umgebung des Bereichs 90 mit einem weiteren Ansatz 100 ausgestattet ist, Am Ansatz 100 liegen die Wände der Öffnung 96 der Werkzeuge 54 an, wenn die Werkzeuge 54 durch die Stifte 82 an der Halterung 72 fixiert sind. Die Ansätze 98 stellen eine Drehmomentübertragung von der Halterung 72 auf die Werkzeuge 54 in Drehrichtung sicher, unabhängig von den Stiften 82 und der Ansatz 100 ermöglicht ein Zentrieren der Werkzeuge 54, wenn die Stifte 82 abreißen sollten und verhindert ein unerwünschtes Bewegen (Kippen) der Werkzeuge 54 in diesem Fall.

Eine drehfeste und axial unverschiebbare Verbindung zwischen der Halterung 72 und der Antriebswelle 56 erfolgt durch die Verzahnung 92 des Bereichs 90 der Halterung 72, welcher durch eine Schraube 76 gegen die komplementäre Verzahnung der Antriebswelle 56 gezogen wird. Hierzu können der Bereich 90 innenseitig und die Antriebswelle 56 außenseitig komplementär konisch ausgeführt sein, was aber optional ist. Die mit ihrem Gewinde in ein mittiges Gewinde im unteren Ende der Antriebswelle 56 eingedrehte Schraube 76 zieht eine Scheibe 78 gegen den Flansch 72 und fixiert somit schließlich die Halterung 72 und mit ihr die Werkzeuge 54 an der Antriebswelle.

Nach alledem erhält man folgende Wirkungsweise des Mulchgeräts 50. Im Erntebetrieb wird der Erntevorsatz 20 und mit die Mulchgeräte 50 über das Feld bewegt, während die Antriebswelle 56 und die Werkzeuge 54 rotieren. Dabei bewegen sich die Mulchgeräte 50 bodenkopierend über den Boden, d.h. sie schwenken abhängig von der Form des Terrains um die Achse der Querwelle 68. Dabei ist die Antriebswelle 56 in der Regel etwa vertikal oder leicht schräg nach hinten und oben orientiert, wie in der Figur 2 dargestellt. Die Pflanzenstoppel 80 werden bearbeitet.

Falls nun ein Stein oder ein anderes hartes Hindernis auf dem Feld liegen sollte, wirken unterschiedliche Kräfte und Drehmomente auf das Werkzeug 54, nämlich abhängig davon, wie der Aufprall des Werkzeugs 54 auf den Stein erfolgt:

Wird der Stein frontal getroffen, d.h. mit der in Drehrichtung vorlaufenden Fläche des Werkzeugs 54, entsteht ein Drehmoment zwischen dem Werkzeug 54 und der Halterung 72 bzw. der Antriebswelle 56, das bestrebt ist, das Werkzeug 54 gegenüber der Halterung 72 um die Drehachse der Antriebswelle 56 zu drehen (tordieren). Überschreitet dieses Drehmoment einen Schwellenwert, der durch den Abstand der Stifte 82 von der Drehachse der Antriebswelle 56 und von Materialeigenschaften der Stifte 82 abhängt, reißen (d.h. scheren) die Stifte 82 nicht ab, denn das Drehmoment wird durch die Ansätze 98 vom Werkzeug 54 auf die Halterung 72 übertragen (und umgekehrt). Diese Art von Anprall ist weniger problematisch und wird durch eine Überlastkupplung im Getriebe 66 abgesichert.

Es gibt jedoch auch Situationen, in denen die Unterseite des Werkzeugs 54 auf den Stein trifft. Dadurch entsteht ein Drehmoment zwischen dem Werkzeug 54 und der Halterung 72 bzw. der Antriebswelle 56, das bestrebt ist, das Werkzeug 54 gegenüber der Halterung 72 um eine Achse zu drehen (kippen), die quer zur Drehachse der Antriebswelle 56 orientiert ist. Das Drehmoment versucht mit anderen Worten das Werkzeug 54 in der Ebene, in der die Antriebswelle 56 und das Werkzeug 54 liegen, um eine quer zu dieser Ebene orientierte Achse zu drehen. Wenn der Anprall des Steins mehr oder weniger vor oder der Drehachse der Antriebswelle 56 liegen sollte, ist das weniger problematisch, da das ganze Mulchgerät 50 dann um die Achse der Querwelle 48 nach hinten (bei Aufprall vor der Drehachse) oder vorn (bei Aufprall hinter der Drehachse) ausweichen kann, jedenfalls solange noch ein hinreichender Schwenkbereich des Mulchgeräts 50 zur Verfügung steht. Sollte der Aufprall jedoch links oder rechts der Drehachse der Antriebswelle 56 erfolgen, ist kein derartiges Ausweichen der Drehachse 56 möglich, was zu einer Beschädigung insbesondere des Getriebes 66 führen kann. Durch die erfindungsgemäßen Verbindungsmittel 64, die eine Überlastsicherung zwischen dem Werkzeug 54 und der Antriebswelle 56 in der hier beschriebenen Kipprichtung (in der quer zur Ebene des Werkzeugs 54 und der Antriebswelle 56 liegenden Ebene) bereitstellen, wird dieses Problem vermieden, denn in dem beschriebenen Fall wird wenigstens einer der Stifte 82 durch die entlang seiner Längsachse wirkenden Kräfte abgerissen. Eine Beschädigung des Getriebes 66 findet nicht statt und lediglich der abgerissene Stift 82 ist auszutauschen und ggf. das Werkzeug 54 zu richten oder auszutauschen. Der Ansatz 100, an dem das Werkzeug 54 mit den Wänden seiner Öffnung 96 anliegt, stellt sicher, dass sich das Werkzeug 54 in diesem Fall nicht unkoordiniert gegenüber der Halterung 72 bewegen kann, denn es wird sich weiter um die Drehachse der Antriebswelle 56 drehen.

## Patentansprüche

1. Erntevorsatz (20) mit Ernteeinheiten (32) zur Ernte von stängelartigen Pflanzen und wenigstens einem, den Ernteeinheiten (32) nachgeordneten Mulchgerät (50) zur Bearbeitung von Pflanzenstoppeln (80), wobei das Mulchgerät (50) folgendes umfasst:
eine durch ein Getriebe (66) um eine vertikale oder gegenüber der Vertikalen geneigte Achse drehbare Antriebswelle (56), welche bodenkopierend um eine quer zur Vorwärtsrichtung des Mulchgeräts (50) orientierte Achse schwenkbeweglich ist,
ein mit der Antriebswelle (56) gekoppeltes Werkzeug (54) zur Bearbeitung der Pflanzenstoppeln (80), das durch die Antriebswelle (56) in eine Drehbewegung versetzbar ist, und
Verbindungsmittel (64) zur drehmomentübertragenden Verbindung der Antriebwelle (56) mit dem Werkzeug (54),
**dadurch gekennzeichnet, dass** die Verbindungsmittel (64) eine Überlastsicherung umfassen, die konfiguriert ist, bei Überschreitung eines maximalen, zwischen der Antriebswelle (56) und dem Werkzeug (54) wirkenden Drehmoments abzureißen, wenn das Drehmoment das Werkzeug (54) gegenüber der Antriebswelle (56) um eine quer zur Drehachse der Antriebswelle (56) gerichtete Achse verkippt,
dass die Verbindungsmittel (64) eine drehfest und axial unbeweglich mit der Antriebswelle (56) gekoppelte Halterung (72) und mehrere, zwischen der Halterung (72) und dem Werkzeug (54) angeordnete, bei Überlastung abreißende, parallel zur Drehachse orientierte Stifte (82) umfassen, und
dass die Halterung (72) mit Ansätzen (98) ausgestattet ist, die eine Drehmomentübertragung von der Halterung (72) auf das Werkzeug (54) und umgekehrt in Drehrichtung ermöglichen, während ein Überschreiten eines maximalen Drehmoments, welches das Werkzeug (54) gegenüber der Antriebswelle (56) gegenüber der Drehrichtung tordiert, durch eine Überlastkupplung im Getriebe (66) abgesichert ist und nicht zum Abreißen der Stifte (82) führt, da dieses Drehmoment durch die Ansätze (98) vom Werkzeug (54) auf die Halterung (72) übertragen wird.

2. Erntevorsatz (20) nach Anspruch 1, wobei der Stift (82) als Schraube ausgeführt ist.

3. Erntevorsatz (20) nach Anspruch 1 oder 2, wobei die Halterung (72) einen weiteren Ansatz (100) umfasst, der konfiguriert ist, nach Abreißen eines Stifts (82) eine unkontrollierte Bewegung des Werkzeugs (54) gegenüber der Halterung (72) zu verhindern.

4. Erntevorsatz nach einem der Ansprüche 1 bis 3, wobei die Ansätze (98) jeweils in der Nachbarschaft des Stifts (82) an die Halterung (72) angeformt sind und mit einer Wand einer Bohrung oder Öffnung des Werkzeugs (54) zusammenwirken, durch welche sich der Stift (82) erstreckt.

## Claims

1. Harvesting header (20) having harvesting units (32) for harvesting stalk-type plants, and having at least one mulching implement (50), arranged behind the harvesting units (32), for processing plant stubble (80), wherein the mulching implement (50) comprises the following:
a drive shaft (56) which is rotatable about a vertical axis, or an axis inclined in relation to the vertical, by way of a transmission (66) and which is pivotable, so as to follow the ground, about an axis oriented transversely to the forward direction of the mulching implement (50),
a tool (54), coupled to the drive shaft (56), for processing the plant stubble (80), which tool is able to be set in rotational motion by way of the drive shaft (56), and
connecting means (64) for torque-transmitting connection of the drive shaft (56) to the tool (54),
**characterized in that** the connecting means (64) comprise an overload prevention means which is configured such that, in the event of exceedance of a maximum torque acting between the drive shaft (56) and the tool (54), it tears off if the torque causes the tool (54) to tilt about an axis directed transversely to the axis of rotation of the drive shaft (56) in relation to the drive shaft (56),
**in that** the connecting means (64) comprise a holder (72), which is coupled rotationally conjointly and axially immovably to the drive shaft (56), and multiple pins (82), which are arranged between the holder (72) and the tool (54) and tear off in the event of overload and are oriented parallel to the axis of rotation, and
**in that** the holder (72) is equipped with projections (98) which make it possible for torque to be transmitted from the holder (72) to the tool (54) and vice versa in the direction of rotation, while exceedance of a maximum torque which causes the tool (54) to be twisted in relation to the drive shaft (56) in relation to the direction of rotation is protected against by way of an overload coupling in the transmission (66) and does not lead to the pins (82) being torn off, since this torque is transmitted from the tool (54) to the holder (72) by way of the projections (98).

2. Harvesting header (20) according to Claim 1, wherein the pin (82) is in the form of a screw.

3. Harvesting header (20) according to Claim 1 or 2, wherein the holder (72) comprises a further projection (100), which is configured such that, after a pin (82) has been torn off, it prevents uncontrolled movement of the tool (54) in relation to the holder (72).

4. Harvesting header according to one of Claims 1 to 3, wherein the projections (98) are each integrally formed on the holder (72) in the vicinity of the pin (82) and interact with a wall of a bore or opening of the tool (54) through which the pin (82) extends.

## Revendications

1. Tête de récolte (20) avec des unités de récolte (32) pour la récolte de plantes à tiges et au moins un appareil de broyage (50) disposé en aval des unités de récolte (32) pour le traitement des chaumes de plantes (80), l'appareil de broyage (50) comprenant ce qui suit :
un arbre d'entraînement (56) apte à être entraîné en rotation par un engrenage (66) autour d'un axe vertical ou incliné par rapport à la verticale, lequel est apte à pivoter en copiant le sol autour d'un axe orienté transversalement à la direction d'avancement du appareil de broyage (50),
un outil (54) relié à l'arbre d'entraînement (56) pour le traitement des chaumes de plantes (80), lequel est apte à être mis en mouvement de rotation par l'arbre d'entraînement (56), et
des moyens de liaison (64) pour la liaison de transmission de couple de l'arbre d'entraînement (56) à l'outil (54),
**caractérisé en ce que** les moyens de liaison (64) comprennent une protection contre les surcharges qui est configurée pour se rompre en cas de dépassement d'un couple maximal agissant entre l'arbre d'entraînement (56) et l'outil (54), lorsque le couple fait basculer l'outil (54) par rapport à l'arbre d'entraînement (56) autour d'un axe orienté transversalement à l'axe de rotation de l'arbre d'entraînement (56),
**en ce que** les moyens de liaison (64) comprennent un support (72) relié de manière fixe en rotation et immobile axialement à l'arbre d'entraînement (56) et plusieurs goupilles (82) disposées entre le support (72) et l'outil (54), orientées parallèlement à l'axe de rotation et se rompant en cas de surcharge, et
**en ce que** le support (72) est équipé d'appendices (98) qui permettent une transmission du couple du support (72) à l'outil (54) et inversement dans le sens de rotation, tandis qu'un dépassement d'un couple maximal, qui fait tourner l'outil (54) par rapport à l'arbre d'entraînement (56) dans le sens opposé au sens de rotation, est assuré par un accouplement de surcharge dans la transmission (66) et n'entraîne pas l'arrachement des goupilles (82), car ce couple est transmis de l'outil (54) au support (72) par les appendices (98).

2. Tête de récolte (20) selon la revendication 1, dans laquelle la goupille (82) est une vis.

3. Tête de récolte (20) selon la revendication 1 ou 2, dans laquelle le support (72) comprend un autre appendice (100) qui est configuré pour empêcher un mouvement incontrôlé de l'outil (54) par rapport au support (72) après l'arrachement d'une goupille (82).

4. Tête de récolte selon l'une quelconque des revendications 1 à 3, dans laquelle les appendices (98) sont chacun formés sur le support (72) au voisinage de la goupille (82) et coopèrent avec une paroi d'un alésage ou d'une ouverture de l'outil (54) à travers laquelle s'étend la goupille (82).
